# EUROPÄISCHE PATENTANMELDUNG

(11) **EP 0 858 922 A1**
(43) Veröffentlichungstag der Anmeldung: **19.08.1998**
(21) Anmeldenummer: 97121721.1
(22) Anmeldetag: 10.12.1997
(51) Int. Cl.: B60K 15/05

(54) **Vorrichtung zur Aufnahme des Tankstutzens bei Kraftfahrzeugen**

(30) Priorität: 14.02.1997 DE 29702581 U
(71) Anmelder: Mittelhäuser, Bernhard, D-30900 Wedemark (DE)
(72) Erfinder: Busch, Marcus, 31275 Lehrte (DE)
(74) Vertreter: Depmeyer, Lothar

(57) **Zusammenfassung**

Die Erfindung betrifft eine Vorrichtung zur Aufnahme des Tankstutzens bei Kraftfahrzeugen, die in die Aussenhaut (1) des Fahrzeuges einsetzbar und eine unter der Wirkung einer Öffnungsfeder (15) stehende Klappe (4) im geschlossenen Zustand von einem Arretierbolzen (12) gehalten ist. Der Erfindung liegt die Aufgabe zugrunde, die Befestigungsmittel für die Halterung der Vorrichtung im Kraftfahrzeug zur vereinfachen. Zur Lösung dieser Aufgabe ist erfindungsgemäss die Öffnungsfeder (15) mit einer abstehenden Zunge (18) versehen, die einen Rand (9) der Karosserie hinterfasst und beim Einsetzen der Vorrichtung in das Fahrzeug abbiegbar ist.

## Beschreibung

Die Erfindung betrifft eine mit angelenkter Klappe versehene, napfartig gestaltete Vorrichtung zur Aufnahme des Tankstutzens bei Kraftfahrzeugen, wobei die Vorrichtung in eine Öffnung der Aussenhaut des Fahrzeuges einsetzbar und die unter der Wirkung einer Öffnungsfeder stehende Klappe im geschlossenen Zustand von einem vorzugsweise längsverschiebbaren Arretierbolzen gehalten ist.

Derartige Öffnungsfedern haben sich bereits bewahrt, da sie die Klappe mit dem Entriegeln geringfügig öffnen, um so den Klappenrand ohne weiteres erfassen und die Klappe ganz öffnen zu können. Bei den bekannten Vorrichtungen dieser Art bedarf es besonderer Befestigungsmittel um die Vorrichtung in der Öffnung der Fahrzeugaussenhaut montieren zu können.

Der Erfindung liegt die Aufgabe zugrunde, den Aufwand für die Befestigungsmittel zu verringern.

Zur Lösung dieser Aufgabe ist erfindungsgemäss die vorzugsweise als Blattfeder ausgeführte Öffnungsfeder mit einer abstehenden Zunge versehen, die einen Rand der Karosserie hinterfasst, wobei die zur Montage bzw. Demontage gegen die Federkraft abklappbare bzw. abbiegbare Zunge an ihrem freien Ende mit einer Rückbiegung bzw. mit einem angerollten Auge versehen sein kann, die bzw. das an der Innenseite des Randes anliegt.

Demgemäss erfüllt die Öffnungsfeder mit Vorteil zwei Aufgaben. Einmal dient sie der Klappenöffnung, zum anderen dient sie der Halterung der Vorrichtung, und zwar vorzugsweise an der Seite der Vorrichtung, an der sich die längsverschiebbare, der Klappenverriegelung dienende Bolzen befindet.

Die erfindungsgemässe Vorrichtung wird vorzugsweise so ausgeführt, dass mit dem Einsetzen der Vorrichtung in die Karosse die Zunge der Öffnungsfeder von dem vorspringenden Rand erfasst und verdrängt wird, damit die Zunge in der Wirkstellung der Vorrichtung den Rand hinterfassen und festhalten kann. Damit jedoch auch eine Demontage der Vorrichtung mit einfachen Mitteln möglich ist, ist der der Zunge zugekehrte Abschnitt des Napfes bzw. der Vorrichtung mit einer kleinen Durchtrittsöffnung für ein stangenförmiges Werkzeug versehen, mit dem die Zunge abgebogen, also von ihrer Wirkstellung entfernt werden kann, um so die Vorrichtung aus der Öffnung der Aussenhaut des Fahrzeuges herausheben zu können. Ggfs. kann aber auch anstelle einer Durchtrittsöffnung für das Demontagewerkzeug eine Markierung vorgesehen werden, damit dort die Wandung der Vorrichtung mit dem Werkzeug durchstossen werden kann. Diese Möglichkeit ist dann vorzuziehen, wenn die Wandung aus einem elastisch verformbaren, dünnwandigen Elastomer besteht.

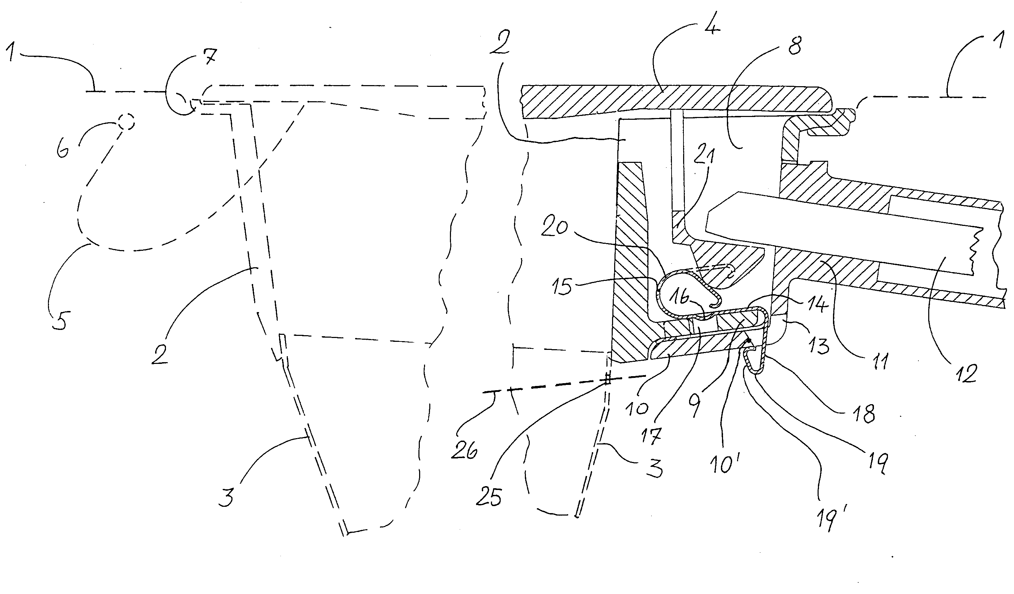

Weitere Einzelheiten der Erfindung werden anhand der Zeichnung erläutert, in der ein Ausführungsbeispiel der Erfindung dargestellt ist.

Die Abbildung zeigt einen Teilschnitt durch die Aussenhaut einer Karosserie für ein Kraftfahrzeug im Bereich der zur Aufnahme des Tankstutzens dienenden Vorrichtung, und zwar bei geschlossenem Deckel.

Die Aussenhaut 1 des Kraftfahrzeuges weist eine Öffnung auf, in die eine napfförmige Vorrichtung eingesetzt ist, die im wesentlichen aus einem Kunststoffring 2 und einer sich zum Inneren des Fahrzeuges hin erstreckenden Mulde 3 aus einem weich eingestellten Kunststoff besteht, die festhaftend mit dem Kunststoffring 2 verbunden ist und auf ihrem Grunde eine im wesentlichen runde Durchbrechung zum Durchtritt des Tankstutzens aufweist. Die Napföffnung wird durch einen klappbar gelagerten Deckel 4 verschlossen, der im wesentlichen mit der Aussenhaut 1 bündig ist und den Tankstutzen überdeckt. Zum Tanken muss dann in üblicher Weise der Deckel 4 aufgeklappt werden.

Der Deckel 4 hat einen Arm 5, der über ein Zapfengelenk bei 6 verschwenkbar mit dem Fahrzeug bzw. dem Kunststoffring 2 verbunden und so gestaltet ist, dass der Deckel 4 von der Schliesstellung gemäss Zeichnung aus um mehr als 90° verschwenkbar ist.

Der Kunststoffring 2 ist an seinem oberen, zur Seite hin abstehenden Rand 7 mit der Karrosse fest verbunden und weist an der dem Arm 5 gegenüberliegenden Seite des Kunststoffringes 2 eine Ausbuchtung 8 auf, deren untere Wandung 9 auf einem fest mit der Karosse verbundenen Wandungsteil 10 aufliegt, das nach oben in eine Lagerstelle 11 für einen Arretierbolzen 12 für den Deckel 4 übergeht. In dem Übergang von dem Wandungsteil 10 zur senkrechten Wand der Lagerstelle 11 befindet sich eine Durchbrechung 13.

Die Wandung 9 wird stramm von einem u-förmigen Abschnitt 14 einer Blattfeder 15 umschlossen, der noch zur Lagesicherung mit einer Auspressung 16 in eine Ausnehmung 17 der Wandung 9 eingreift. Diese somit an der Wandung 9 durch Aufklipsen befestigbare Blattfeder 15 weist eine sich nach unten, in Richtung auf das Innere des Fahrzeuges erstreckende Zunge 18 auf mit einer Rückbiegung 19 unter Bildung einer Schräge 19'. Oberhalb der Wandung 9 - zur Deckelseite hin - ist die Blattfeder 15 mit einem frei abstehenden Steg 20 versehen, der im nicht geschlossenen Zustand des Deckels 4 die gestrichelte Stellung einnimmt und so etwa waagerecht zur Wandung 9 verläuft.

Der Steg 20 ist im geschlossenen, arretierten Zustand des Deckels 4 nach unten gebogen; soll der Deckel 4 zum Tanken aufgeklappt werden, so wird der Arretierbolzen 12 zurückgezogen, wobei der nach unten gerichtete Steg 21 des Deckels 4 freikommt und nunmehr unter der Wirkung des sich zurückbewegenden Steges 20 der Blattfeder 15 derart angehoben wird, dass der Deckel 4 geringfügig aufklappt, am freien Rand von Hand erfasst und so bequem geöffnet werden kann.

Wichtig ist, dass die Zunge 18 der Blattfeder 15 die Durchbrechung 13 durchsetzt und mit ihrer Rückbiegung 19 den die Durchbrechung 13 begrenzenden Rand der Wandung 9 hinterfasst, wodurch die Vorrichtung ( im wesentlichen die Teile 2, 3 und 4 ) gegen ungewolltes Herausheben aus der Öffnung der Aussenhaut 1 gesichert ist. Darüber hinaus erfolgt die Arretierung dieser Teile auch automatisch, weil der Rand 10' des Wandungsteils 10 beim Absenken der Vorrichtung in die Öffnung der Aussenhaut 1 die Schräge 19' erfasst, die Zunge 18 verdrängt, bis schliesslich die Rückbiegung 19 das Wandungsteil 10 hinterfassen kann. Wie aus der Zeichnung erkennbar ist, weist auch der Rand 10' eine ein Abdrängen der Zunge 18 fördernde Schräge auf.

Um die Vorrichtung demontieren zu können, ist die Mulde 3 an der der Zunge 18 benachbarten Stelle mit einer kleinen Durchbrechung 25 versehen, durch die ein stabförmiges Werkzeug 26 eingeführt werden kann, um die Zunge 18 zurückbiegen bzw. aus ihrer Wirkstellung entfernen zu können, damit die Vorrichtung herausgehoben werden kann.

Die Begriffe " oben " ( in Richtung auf den Deckel 4 der Vorrichtung ) und " unten " ( in Richtung auf das Innere des Fahrzeuges ) beziehen sich auf die zeichnerische Darstellung; im eingebauten Zustand der Vorrichtung kann diese schräg oder sogar mit ihrem Deckel 4 in senkrechter Lage angeordnet sein.

## Patentansprüche

1. Mit angelenkter Klappe ( Deckel ) versehene, napfartig gestaltete Vorrichtung zur Aufnahme des Tankstutzens bei Kraftfahrzeugen, wobei die Vorrichtung in eine Öffnung der Aussenhaut des Fahrzeuges einsetzbar und die unter der Wirkung einer Blattfeder stehende Klappe im geschlossenen Zustand von einem Arretierbolzen gehalten ist und wobei ferner mit dem Zurückziehen des Arretierbolzens die Klappe durch die sich entspannende Blattfeder ( Öffnungsfeder ) um ein geringes Mass aufgeklappt wird, dadurch gekennzeichnet, dass die Blattfeder (15) mit einer vorzugsweise nach unten abstehenden Zunge (18) versehen ist, die einen Rand (Wandungsteil 10) der Karosse ( bzw. ein fest hiermit verbundenes Element ) hinterfasst und durch das Einsetzen der Vorrichtung abbiegbar ist.

2. Vorrichtung nach Anspruch 1, dadurch gekennzeichnet, dass die Zunge (18) den Rand mit einer Ab- bzw. Rückbiegung (19) hinterfasst.

3. Vorrichtung nach Anspruch 2, dadurch gekennzeichnet, dass die Ab- bzw. Rückbiegung (19) eine Auflaufschräge (19') aufweist.

4. Vorrichtung nach Anspruch 1, dadurch gekennzeichnet, dass die Zunge (18) eine Durchbrechung (13) eines Wandungsteils (10) der Karosse bzw. eines fest damit verbundenen Elementes durchsetzt.

5. Vorrichtung nach Anspruch 1, dadurch gekennzeichnet, dass die Blattfeder (15) mit einem U-förmigen Teil (14) eine Wandung (9) der Vorrichtung fest umschliesst und einen sich zum Deckel (4) hin erstreckenden, gebogenen Steg (20) zur Beaufschlagung durch die Klappe (4) aufweist, wobei sich die Zunge (18) nach unten hin ( ins Innere des Fahrzeuges ) erstreckt.

6. Vorrichtung nach Anspruch 1, dadurch gekennzeichnet, dass die Mulde (3) der Vorrichtung an der der Blattfeder (15) benachbarten Stelle mit einer kleinen Durchbrechung (25) zum Einführen eines Werkzeuges (26) versehen ist, mit dem die Zunge (18) beaufschlagbar ist.

7. Vorrichtung nach Anspruch 1, dadurch gekennzeichnet, dass die Mulde (3) der Vorrichtung an der der Blattfeder (15) benachbarten Stelle mit einem Vorsprung, einer Vertiefung oder einen ähnlichen Markierung versehen ist, um dort die Wandung der Mulde (3) mit einem Werkzeug durchstossen zu können, mit dem die Zunge (18) beaufschlagbar ist.

8. Vorrichtung nach Anspruch 1, dadurch gekennzeichnet, dass sie eine Ausbuchtung (8) mit einer unteren Wandung (9) aufweist, die auf einem etwa parallel dazu verlaufenden Wandungsteil (10) der Karosse bzw. einem fest damit verbundenen Element aufweist, wobei sich zwischen diesen Wandungen (9,10) Teile der Blattfeder (15) befinden können.
